# EUROPEAN PATENT APPLICATION

(11) **EP 4 733 024 A1**
(43) Date of publication of application: **29.04.2026**
(21) Application number: 24208354.1
(22) Date of filing: 23.10.2024
(51) Int. Cl.: B27N 3/18, B27N 3/20, B27N 3/22, B27N 5/02, B27N 3/00, B27N 3/04, B27N 5/00, B29C 37/00, B29C 43/00, B29C 43/04, B29C 43/34, B29C 43/50, B31F 1/00, B25J 15/06

(54) **PRODUCT FORMING UNIT FOR DRY MANUFACTURING RIGID CELLULOSE PRODUCTS AND METHOD FOR CONTROLLING SUCH PRODUCT FORMING UNIT**

(71) Applicant: Yangi AB, 432 48 Varberg (SE)
(72) Inventor: HOLT, Roger, 3261 Larvik (NO)
(74) Representative: Brann AB

(57) **Abstract**

The present invention relates to a method and a product forming unit for dry manufacturing rigid cellulose products (2) having essentially non-flat general shape from a cellulose blank. The product forming unit comprising a moulding tool having a first mould part (15) and a second mould part (16), wherein at least one of the first mould part (15) and the second mould part (16) is displaceable in the axial direction in relation to the other in order to press the cellulose blank therebetween into final shape by applying a predetermined pressure P in the axial direction of the moulding tool, the product forming unit further comprising heating means for heating the cellulose blank (10) to a forming temperature T and an out-feed device (28) having a movable arm (29) and a first suction device (30) connected to said arm (29). Wherein first suction device (30) of the out-feed device (28) is insertable into the moulding tool after the pressing of the cellulose product (2) in order to engage the cellulose product (2), wherein the first suction device (30) is retractable from the moulding tool in order to remove the cellulose product (2) from the moulding tool. The out-feed device (28) is operatively connected to means for determining the real pressure level of the first suction device (30) during the retraction of the first suction device (30), and is operatively connected to means for comparing the determined real pressure level of the first suction device (30) and a predetermined pressure level threshold in order to confirm whether successful or unsuccessful removal of the cellulose product (2) from the moulding tool is executed.

## Description

### Technical field of the Invention

The present invention relates in general to the field of method and apparatus for dry manufacturing of rigid cellulose products having non-flat general shape from cellulose blank. Such cellulose products may be used for packaging, storing, transporting and/or displaying other products such as electronics, tools, jewelry, food, dairy products, cosmetics, etc., and/or may be used as single/multiple use disposable articles. The method and product forming unit are especially defined to secure reliable knowledge of the result of the removal of the rigid cellulose product from the moulding tool, and to secure the product forming unit from becoming damaged. By cellulose products means products that mainly consists of the cellulose part of organic matter.

The present invention relates specifically to a product forming unit for dry manufacturing rigid cellulose products, the product forming unit comprising a moulding tool having a first mould part and a second mould part, wherein at least one of the first mould part and the second mould part is displaceable in the axial direction in relation to the other in order to press the cellulose blank therebetween into final shape by applying a predetermined forming pressure P in the axial direction of the moulding tool, the product forming unit comprising heating means for heating the cellulose blank to a forming temperature T and an out-feed device having a movable arm and a first suction device connected to said arm, wherein first suction device of the out-feed device is insertable into the moulding tool between the first mould part and the second mould part after the pressing of the cellulose product in order to engage the cellulose product, wherein the first suction device of the out-feed device is retractable from the moulding tool in order to remove the cellulose product from the moulding tool. The present invention also relates specifically to a method for controlling such product forming unit, wherein the method comprises the general steps of providing the cellulose blank into the moulding tool between the first mould part and the second mould part, displacing at least one of the first mould part and the second mould part in the axial direction in relation to each other, towards each other, pressing the heated cellulose blank between the first mould part and the second mould part, displacing at least one of the first mould part and the second mould part in the axial direction in relation to each other, away from each other, inserting the first suction device of the out-feed device into the moulding tool between the first mould part and the second mould part in order to engage the cellulose product, and retracting the first suction device of the out-feed device from the moulding tool in order to remove the cellulose product from the moulding tool.

### Background of the Invention

There are many situations where it is desirable to provide two-dimensional (2D) or three-dimensional (3D) shaped objects made of sustainable materials, such as biomaterials, instead of using plastic/polymer materials. A biomaterial commonly used for packaging and disposable articles is wet moulded pulp based on cellulose fibres. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

One advantage of using wet-forming techniques is that the moulding tool is usually made of a wire netting/cloth that is filled with a wet cellulose slurry and thereafter the cellulose slurry is dried and obtains the shape of the moulding tool. The final rigid cellulose product is easily removed from the wire netting.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure. The dry-forming techniques comprises different steps of generating an air-laid cellulose blank, that is fed into a product forming unit, i.e. thermo-forming press.

The technical field of dry manufacturing rigid cellulose products having essentially non-flat general shape, such as trays, lids, or the like, i.e. wherein the forming/pressing is performed in one step using a moulding tool having a first/male mould part and a second/female mould part configured to cooperate with each other, is well known. However, the sub-technical field of reliably removing the final rigid cellulose products from the moulding tool and thereby protecting the product forming unit from becoming damaged, is still exposed to challenges.

It is known within the present technical field, to use one or more suction devices/cups to remove the pressed cellulose product from the moulding tool. However, situations may arise when the cellulose product is somehow not successfully removed from the moulding tool. After the thermo-forming/pressing step, the pressed cellulose product has to be successfully removed from the moulding tool in order to able to have continuous operation. If the pressed cellulose product is still located in the moulding tool between the first mould part and the second mould part when the next cellulose blank is provided into the moulding tool, the moulding tool may become damaged, the in-feed device may become damaged, the next cellulose product will become defective, and/or the out-feed device may become damaged.

Thus, there is a need in the art for a reliable, cheap and unharmful dry-forming technique/process for dry manufacturing rigid cellulose products having non-flat general shape, wherein the pressed cellulose products as well as the product forming unit are protected from damage due to unsuccessful removal of the cellulose product from the moulding tool.

### Object of the Invention

The present invention aims at obviating the aforementioned and other disadvantages and failings of previously known methods and devices for dry manufacturing rigid cellulose products, and at providing an improved product forming unit and method for dry manufacturing rigid cellulose products having non-flat general shape, wherein reliable knowledge about the result of the removal of the pressed cellulose product from the moulding tool is secured.

A primary object of the present invention is to provide an improved product forming unit for dry forming/manufacturing rigid cellulose products having non-flat general shape and an improved method for controlling such product forming unit, wherein the environmental benefits as well as time and energy saving benefits of conventional dry-forming techniques are maintained. It is another object of the present invention to provide an improved product forming unit for dry forming/manufacturing rigid cellulose products having non-flat general shape and an improved method for controlling such product forming unit, wherein the product forming unit is protected from becoming damaged due to unsuccessful removal of the cellulose product from the moulding tool. It is another object of the present invention to provide an improved product forming unit for dry forming/manufacturing rigid cellulose products having non-flat general shape and an improved method for controlling such product forming unit, wherein the pressed cellulose products are protected from becoming damaged due to unsuccessful removal of the cellulose product from the moulding tool.

### Summary of the Invention

According to the invention at least the primary object is attained by means of the initially defined product forming unit and method having the features defined in the independent claims. Preferred embodiments of the present invention are further defined in the dependent claims.

According to one aspect of the present invention, there is provided a product forming unit of the initially defined type, wherein the out-feed device is operatively connected to means for determining real pressure level of the first suction device during the retraction of the first suction device, and is operatively connected to means for comparing the determined real pressure level of the first suction device and a predetermined pressure level threshold in order to confirm whether successful or unsuccessful removal of the cellulose product from the moulding tool is executed.

According to another aspect of the present invention, there is provided a method for dry manufacturing rigid cellulose products having essentially non-flat general shape from a cellulose blank using a product forming unit as defined herein above, wherein the method in addition to the general steps initially defined comprises the steps of:
- determining a real pressure level of the first suction device, and
- comparing the determined real pressure level of the first suction device and a predetermined pressure level threshold, wherein the removal of the cellulose product from the moulding tool is confirmed as successful when the real pressure level is lower than the pressure level threshold and wherein the removal of the cellulose product from the moulding tool is determined as unsuccessful when the real pressure level is higher than said pressure level threshold.

Thus, the present invention is based on the insight that it is of uttermost importance to have correct knowledge about the result of the removal of the rigid cellulose product in order to secure that the product forming unit and the cellulose products are not damaged. Thus, the inventor has developed an effective and reliable control methodology for obtaining reliable knowledge about the result of the removal of the cellulose product from the moulding tool.

The inventive method and product forming unit will secure that the product forming unit and the cellulose products are not damaged, should the removal of the pressed cellulose product from the moulding tool not being successful.

The requirement that the investigation whether the removal of the cellulose product from the moulding tool is successful or not takes place during the retraction of the out-feed device from the moulding tool, entails the advantage that the operation of the product forming unit may be stopped before the next press cycle in the moulding tool, i.e. before the next cellulose blank is provided into the moulding tool, if the removal of the cellulose product is determined as unsuccessful.

According to various example embodiments of the present invention, the method comprises a step of determining whether a cellulose blank was successfully provided into the moulding fool. Thereby, the operation of the product forming unit may be continued or re-started automatically without the need of manual cleaning/inspection of the product forming unit.

According to various example embodiments of the present invention, the out-feed device is connected to a low-pressure source via a conduit extending from the low-pressure source to the out-feed device, wherein the first suction device of the out-feed device is constituted by a suction cup, the out-feed device comprising a controllable valve connected to the movable arm of the out-feed device. Thereby, the system response time between deactivated and activated suction device is minimized, entailing a minimized time before the investigation whether the removal of the cellulose product from the moulding tool is successful or not may be initiated.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool, wherein a cellulose blank is provided into the moulding tool between the first/female mould part and the second/male mould part,
- Fig. 3: is a schematic illustration of the moulding tool according to figure 2 during forming/pressing of the cellulose product,
- Fig. 4: is a schematic illustration of the moulding tool according to figures 2 and 3 after the forming/pressing step and the pressed cellulose product is released from the moulding tool,
- Fig. 5: is a schematic illustration of the pressed cellulose product according to figure 4, wherein the scrap area is removed from the final cellulose product,
- Fig. 6: is a schematic illustration of an out-feed device, wherein the out-feed device is inserted into the moulding tool between the first/female mould part and the second/male mould part,
- Fig. 7: is a schematic illustration of the out-feed device according to figure 6, wherein the first suction device is about to engage the pressed cellulose product,
- Fig. 8: is a schematic illustration of the out-feed device according to figures 6 and 7, wherein the out-feed device together with the cellulose product are removed from the moulding tool, and
- Fig. 9: is a schematic illustration of an apparatus for dry manufacturing rigid cellulose products, wherein the in-feed device provides the next cellulose blank into the moulding tool at the same time as the out-feed device retracts from the moulding tool.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

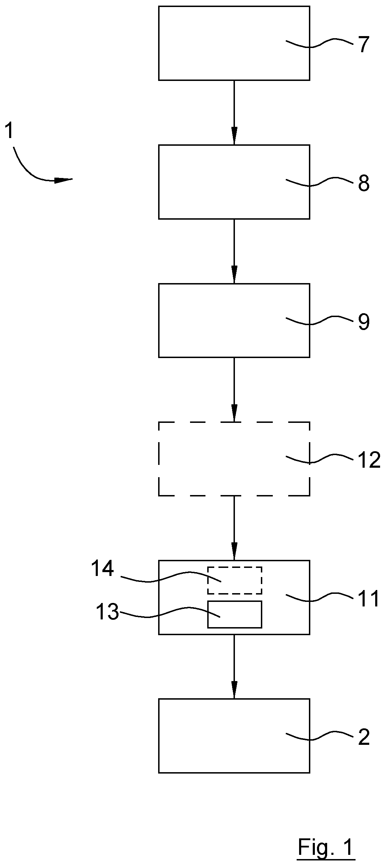

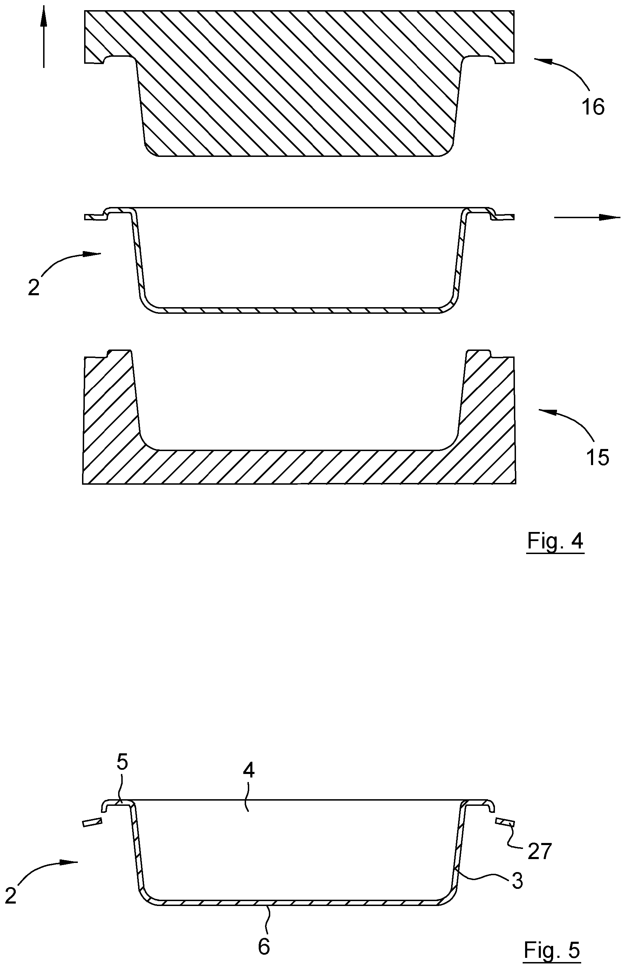

Reference is initially made to figures 1 and 5, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 5 disclose an example of a rigid cellulose product/tray 2. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 5 disclose an example of a rigid cellulose product 2 in the shape of a tray/container, wherein the tray is formed using the inventive method. The tray 2 comprises an inclined circumferential wall 3 and an opening 4 defined by a circumferential rim/brim 5 connected to the upper/free end of the wall 3. According to figure 5 embodiment the brim 5 has an angled shape having an essentially radially extending upper surface and a turned-down outer edge, however it shall be pointed out that the cross-section of the brim 5 may have other shapes. The tray 2 may have truncated cone shape having straight wall 3, narrowing in the direction away from the opening 4, in accordance with figure 5 embodiment. The tray 2 may for instance have curved-shaped wall 3 seen in the axial plane. By having inclined walls 3 multiple trays 2 are stackable one inside the other when they are empty. The tray could also be a mug/cup, a lid, packaging or the like container/product. The cross section of the circumferential wall 3 in the radial plane may have any suitable shape, circular, oval, rectangular, polygonal, etc., and may differ in shape and/or dimension along the axial extension of the tray 2. The tray 2 comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 5 embodiment, and/or be partly located at an axial distance from the lower end of the wall 3, or a combination thereof. The circumferential wall 3 is connected to and extends in the axial direction upwards from the bottom portion 6.

Cellulose raw material 7, i.e. comprising mainly the cellulose part of organic matter, is provided to the production line, and is fed to a separating/disintegrating unit 8 in order to obtain individualized/separated cellulose fibres. The separated cellulose fibres are thereafter transported by an air stream/flow to a dispenser of a cellulose blank/sheet forming unit 9. The cellulose fibres are laid by the dispenser on a moving or stationary perforated surface of the cellulose blank forming unit 9. The cellulose fibre carrying air flow may be generated by suitable device located upstream and/or downstream the perforated surface. Thereafter the generated cellulose blank, generally designated 10, is transported/transferred to a product forming unit 11, whereby rigid cellulose products 2 are formed and discharged from the product forming unit 11.

The cellulose blank forming unit 9 may be configured to generate a continuous cellulose blank/web 10 and/or discontinuous/discrete cellulose blanks 10. Discontinuous/discrete cellulose blanks 10 are fed into the product forming unit 11.

The cellulose raw material 7 may be in the form of reeled pulp or paper, bale of cellulose pulp, paper, etc. and/or sheets of paper, cellulose pulp, etc. In case said cellulose raw material 7 is in the form of sheets and/or reeled pulp or paper, it can be fed directly into the separating unit 8. However, in case said cellulose raw material 7 is in the form of a bale or compact stacks of sheets, etc. one or more shredders and/or one or more additional separating/disintegrating units 8 may be necessary to be used for separating and dosing said cellulose raw material 7 from said bale or sheets in smaller quantities. The shredder(s) prepare cellulose raw material 7 to be accepted by said separating unit 8. The separating unit 8 disintegrates the cellulose raw material 7 into separated cellulose fibres. Said one or plurality of shredder(s) are arranged before said one or a plurality of separating unit(s) 8, so that an output of one of said shredder is connected to an input of one of said separating units 8. The shredders may be arranged in parallel to each other or in series with each other, and the disintegrating units 8 may be arranged in parallel to each other or in series with each other. The shredders and the disintegrating units 8 together constitute a cellulose fibre separating unit, arranged upstream the cellulose blank forming unit 9.

Said cellulose raw material 7 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 8 may according to various embodiments be constituted by a hammer mill. In said separating unit 8 the cellulose raw material is separated into fibres having a normal length in the range of 0,5-70 mm, preferably less than 10 mm. The length of said fibres may be customized by adjusting the internal properties of the separating unit 8 and/or by choosing a different separating unit 8 and/or choosing different cellulose raw material 7. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12, located downstream the cellulose blank forming unit 9 and upstream the product forming unit 11. In the pre-compression and/or imprinting unit 12, an air-laid fluffy cellulose blank 10 having a first thickness may be compressed into a cellulose blank 10 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 11 comprises a press unit 13, and may optionally comprise a pre-heating unit 14 arranged upstream the press unit 13. According to various example embodiments said cellulose blank 10 may be heated to an elevated temperature before being fed into the press unit 13 of the product forming unit 11. In such embodiment(s) where the cellulose blank 10 is preheated before being fed into the press unit 13, said press unit 13 may or may not comprise heating. According to various example embodiment said press unit 13 may be a heated press unit 13 for heating said cellulose blank 10 during pressing. In the case of a heated press unit 13, preheating of said cellulose blank 10 using a pre-heating unit 14 is optional. According to various example embodiments preheating of the cellulose blank 10 in said pre-heating unit 14 may be combined with a heated press unit 13. Having a pre-heating unit 14 in combination with a heated press unit 13 will speed up the manufacturing process in the product forming unit 11, and improve the quality/rigidity of the final rigid cellulose product 2. In the product forming unit 11 the cellulose blank 10 is heated to a forming temperature T in the range 120 - 200 °C in order to obtain adequate rigidity and strength in the final cellulose product 2.

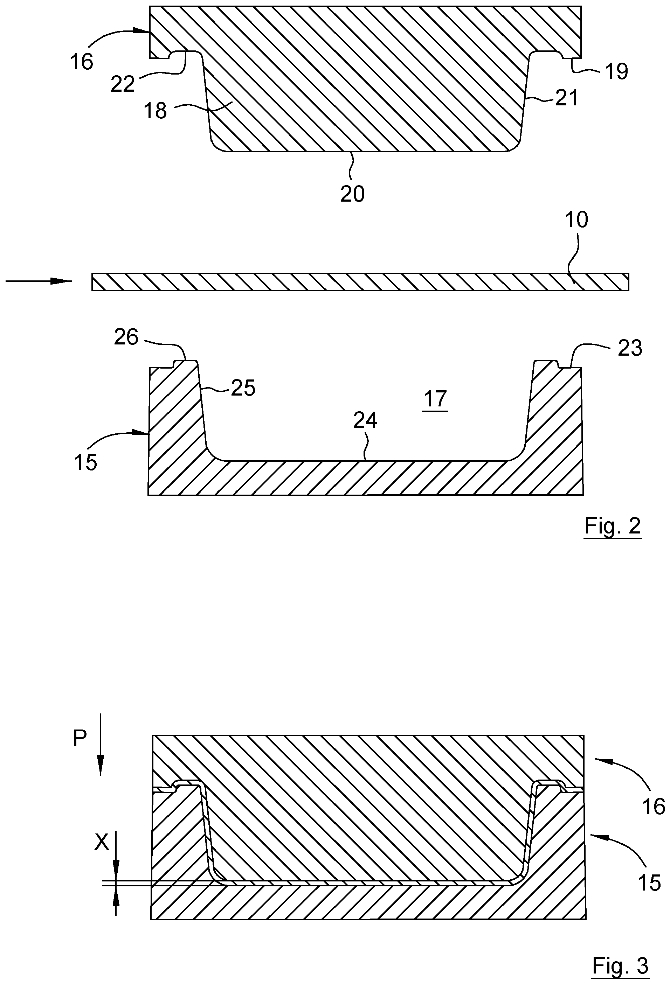

Reference is now made to figures 2-4. The press unit 13 comprises a moulding tool having a first mould part 15 and a second mould part 16 having co-operating designs, wherein at least one of the first mould part 15 and the second mould part 16 is/are displaceable in the axial direction in relation to each other, i.e. reciprocating back and forth in relation to each other, in order to exert pressure to the cellulose blank 10 loaded therebetween. In the figures the mutual displacement is disclosed as being vertical, however the mutual displacement may be horizontal or any other suitable angle. The cellulose blank 10 loaded into the moulding tool, is constituted by the air-laid cellulose blank 10. The air-laid cellulose blank 10 may be generated upstream the product forming unit 11 in the same apparatus/production line and provided/transferred to the product forming unit 11, or may be generated at a separate location and provided/transferred to the product forming unit 11 via intermediate handling and storage.

According to various embodiments the first mould part 15 of the moulding tool is a female mould part, i.e. having a main recess 17 for receiving a major part of the cellulose blank 10, and the second mould part 16 of the moulding tool is a male mould part, i.e. having a main protrusion 18 for cooperation with said recess 17 of the female mould part by being inserted therein, such that the cellulose blank 10 is pressed into a final rigid non-flat shape by applying a predetermined forming pressure P in the axial direction of the moulding tool. According to the disclosed embodiment the male mould part 16 is located above the female mould part 15, but according to alternative embodiments the female mould part may be the second mould part and may be located above the male mould part which is then the first mould part. The pressed cellulose product 2 is intended to remain in/on the first mould part 15 after the pressing of the cellulose product 2, irrespective of the angular orientation of the moulding tool.

The male/second mould part 16 comprises a product press-surface and a scrap press-surface 19 adjacent said product press-surface. In the disclosed example embodiment, the product press-surface of the second mould part 16 comprises a bottom surface 20, a wall surface 21 connected to the bottom surface 20 and extending essentially in the axial direction, and a brim surface 22 connected to the wall surface 21 and extending essentially in the transversal/radial direction. The female/first mould part 15 comprises a product press-surface and a scrap press-surface 23 adjacent said product press-surface. In the disclosed example embodiment, the product press-surface of the first mould part 15 comprises has a bottom surface 24, a wall surface 25 connected to the bottom surface 24 and extending essentially in the axial direction, and a brim surface 26 connected to the wall surface 25 and extending essentially in the transversal/radial direction. The product press-surface of the first mould part 15 and the product press-surface of the second mould part 16 are arranged opposite each other, and the scrap press-surface 23 of the first mould part 15 is arranged opposite the scrap press-surface 19 of the second mould part 16. According to alternative embodiments, the moulding tool does not comprise scrap press-surfaces, i.e. the moulding tool comprises only product press-surfaces and is configured to press/form a cellulose product in its final shape without need for trimming off scrap material.

The cellulose blank 10 is pressed between the surfaces of the male/second mould part 16 and the surfaces of the female/first mould part 15 into final shape. The mutual distance, taken perpendicular to the surface in question, between the product press-surface of the first mould part 15 and the product press-surface of the second mould part 16 during the pressing of the cellulose blank 10 into a cellulose product 2 is X millimetres, wherein X preferably is in the range 0,2-3,0 millimetres, i.e. equal to the thickness of the bottom 6 of the pressed cellulose product 2. Preferably, X is in the range 0,25-1,5 millimetres. The wall surfaces 21, 25 of the moulding tool has to be inclined in order to obtain a release angle for the cellulose product 2, and in order to obtain adequate press force to the wall region 3 of the cellulose product 2.

At a scrap area of the moulding tool, the mutual distance between the scrap press-surface of the first mould part 15 and the scrap press-surface of the second mould part 16 is equal to or more than the mutual distance between the product press-surface of the first mould part 15 and the product press-surface of the second mould part 16. The part of the cellulose blank 10 located at the scrap area may be left entirely uncompressed in the moulding tool, be partially compressed by applying a predetermined partial pressure less than said predetermined forming pressure P, or be fully compressed by applying said predetermined forming pressure P. Thus, radially outside the final rigid cellulose product 2, the cellulose blank 10 comprises a scrap area intended to be cut off. In figure 4 the cellulose product 2 is released and schematically removed from the moulding tool by opening the moulding tool. Figure 5 disclose a schematic illustration of a cellulose tray 2 wherein the scrap 27 is cut off from the cellulose tray 2. According to various embodiments, the scrap 27 may be removed in a separate step in the moulding tool, in a subsequent step outside the moulding tool after the pressing of the cellulose product 2, or in a step concurrent with the pressing of the cellulose product 2.

According to various embodiments. When the compartment of the rigid cellulose tray 2 is filled with objects, a film/cover/lid may be attached to the circumferential rim/brim 5 of the cellulose tray 2, for instance using heat lamination. The lid film may be constituted by a multilayer film comprising polymer, metal, and/or paper.

According to various embodiments. Before any items are placed in the compartment of the rigid cellulose tray, the rigid cellulose tray 2 may be provided with a liner film adhered to at least to the circumferential rim/brim 5, and preferably also to the wall 3 and/or the bottom 6 of the cellulose tray 2. The liner film may be constituted by a multilayer film comprising polymer and/or metal. The adhesion of the liner film to the tray is preferably heat activated.

According to various embodiments, the cellulose blank 10 may comprise barrier additives and/or material property enhancing additives, etc., such that the rigid cellulose tray 2 withstand grease, fat, water, vapour, etc. The additives are preferably provided to the cellulose fibers upstream the disintegrating unit 8 or between the disintegrating unit 8 and the product forming unit 11.

The predetermined forming pressure P is in the range 40-10000N/cm², preferably in the range 100-4000N/cm². According to various embodiments said predetermined pressures are above 1000 N/ cm², and according to various embodiments said predetermined pressures are below 2500 N/ cm². The holding time during the pressing step is in equal to or more than 1 second and equal to or less than 10 seconds, preferably less than 5 seconds, and most preferably less than 3 seconds.

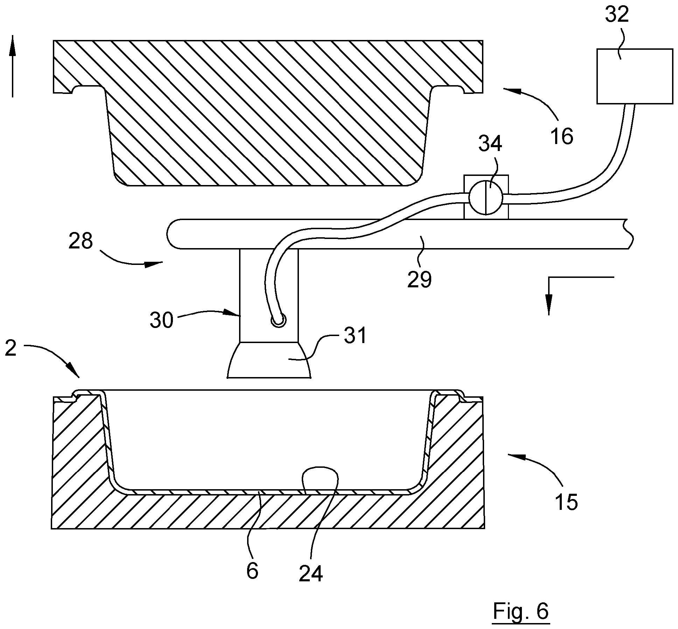

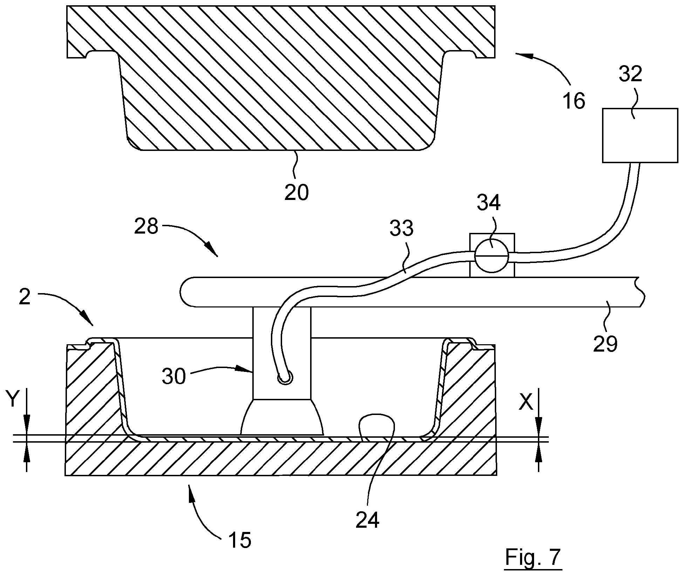

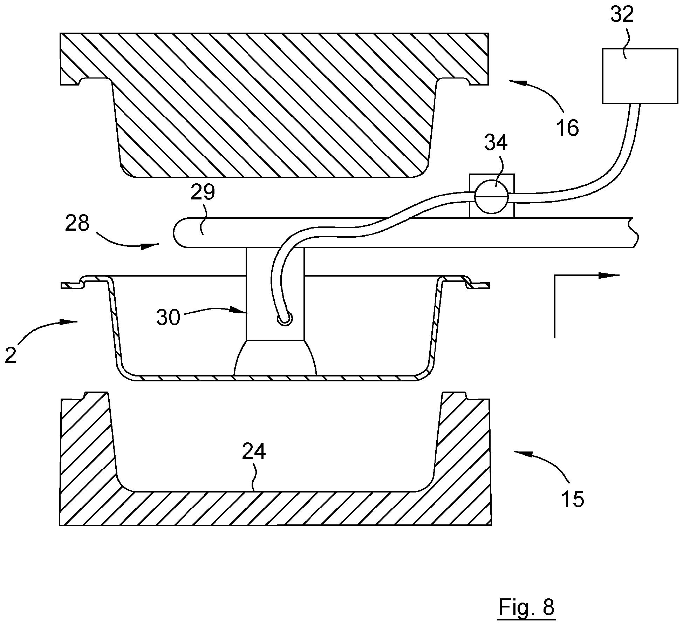

Reference is now especially made to figures 6-8 disclosing a schematic embodiment of the inventive product forming unit 11. The figures disclose the moulding tool of the press unit 13 and an out-feed device, generally designated 28 and schematically illustrated. The out-feed device 28 is configured to remove the pressed cellulose product 2 from the moulding tool in order to make the moulding tool empty and ready for the loading of the next cellulose blank 10. Thus, part of the out-feed device 28 is insertable into the moulding tool between the male/second mould part 16 and the female/first mould part 15 after the pressing of the cellulose product 2. Thus, the pressed cellulose product 2 is intended to be located in/on the first mould part 15 after the pressing of the cellulose product 2, and after the moulding tool is opened. Thereto, the out-feed device 28 may be arranged to transport the pressed cellulose product 2 to a subsequent step in the apparatus such as trimming of the scrap 27 and/or stacking. According to the invention, the out-feed device 28 makes use of a pneumatic arrangement to grasp and release the cellulose product 2. The out-feed device 28 comprises a movable arm 29 that is mechanically controlled and operated, e.g. a robotic arm.

According to the schematic embodiment of the product forming unit 11, the out-feed device 28 comprises said movable arm 29 and a first section device 30 connected to the arm 29. The first suction device 30 is insertable into the moulding tool between the male/second mould part 16 and the female/first mould part 15, and the first suction device 30 is preferably inserted into the moulding tool during the opening of the moulding tool, i.e. when the male mould part 16 and/or the female mould part 15 are traveling away from each other after the pressing of the cellulose product 2. By starting the insertion of the first suction device 30 already before the moulding device is fully open, the pressing cycle time may be decreased, i.e. as long as the different members does not collide.

The first suction device 30 is a pneumatic arrangement, that preferably comprises a suction cup 31 configured to engage the cellulose product 2. The suction cup 31 may be made of a resilient material, a rigid material, or a combination thereof, wherein the pressure level in the volume defined by the suction cup 31 is controllable/adjustable. According to various embodiments, at least the lower rim of the suction cup 31 is made of a resilient material in order to obtain better air-tight seal between the suction device 30 and surface of the cellulose product 2. According to various embodiments, the pressure level in the volume defined by the suction cup may be above as well as below normal/ambient air pressure.

A low pressure level entails that the suction device 30 engage/holds the cellulose product 2, and a high pressure level entails that the suction device 30 ejects/drops the cellulose product 2. Alternatively, normal/ambient air pressure is used in order to drop the cellulose product 2. The out-feed device 28 may comprise a high-pressure source HP and a low-pressure source LP, wherein the first suction device 30 is connected thereto and possibly also to ambient air using an assembly of conduits and controllable valves, in order to alternate therebetween. Alternatively, the out-feed device 28 may comprise only a low-pressure source LP, wherein the first suction device 30 is connected thereto and to ambient air using an assembly of conduits and controllable valves, in order to alternate therebetween.

According to various embodiments, the size of the lower opening of the suction cup 31 is in the range 0,2-20 square centimetres, i.e. corresponding to a diameter of about 0,5-5 centimetres of a suction cup 31 having a circular lower opening. Preferably, the size of the lower opening of the suction cup 31 is in the range 9-16 square centimetres, i.e. corresponding to a diameter of about 3,5-4,5 centimetres of a suction cup 31 having a circular lower opening. According to various embodiments, during engagement the low-pressure level is such that the total lifting force from the suction cup(s) 31 is preferably in the range 10-1000 times the weight of the cellulose product 2. Using a higher low-pressure level there is an increased risk that the cellulose product will not be removed from the moulding tool, and using a lower low-pressure level there is an increased risk that the suction cup 31 will leave a mark on the surface of the cellulose product 2.

According to the invention the first suction device 30 is displaceable towards the bottom surface 24 of the first mould part 15 in order to engage the cellulose product 2 and has a stop position located Y millimetres from the bottom surface 24 of the first mould part 15. The stop position distance Y millimetres is the smallest distance between the bottom surface 24 of the first mould part 15 and the first suction device 30. It is preferred that stop position distance Y millimetres is greater than the distance X millimetres between the bottom surface 20 of the second mould part 16 and the bottom surface 24 of the first mould part 15 during pressing of the cellulose product 2. Thereby the first suction device 30 will not run into the delicate cellulose product 2, any possible generation of vacuum condition between the cellulose product 2 and the first mould part 15 is minimized, and if there is no cellulose product 2 in/on the first mould part 15 the suction device 30 will not contact the bottom surface 24 of the first mould part 15. Thereto, the stop position distance Y millimetres is preferably equal to or less than three times the distance Y millimetres between the bottom surface 20 of the second mould part 16 and the bottom surface 24 of the first mould part 15 during pressing of the cellulose product 2. A greater distance will considerably decrease the risk that the first suction device 30 does not engage/grasp the cellulose product 2.

When the first suction device 30 is located at the stop position, the first suction device 30 is manipulated to engage the cellulose product 2, by decreasing the pressure level in the suction cup 31. Thereby the cellulose product 2 is at least partly lifted from the bottom surface 21 of the first mould part 15. The first suction device 30 may engage the bottom 6 of the cellulose product 2 at the centre thereof or closer to the circumferential wall 3. The activation of the lower pressure in the suction cup 31 may be initiated before the first suction device 30 has reached the stop position, in order to shorten the cycle time, and thereby the intended pressure level has been reached when the first suction device 30 reaches the stop position. The out-feed device 28 and thereby the first suction device 30 is kept still a predetermined waiting time before the out-feed device 28, and the cellulose product 2 are removed/retracted from the moulding tool, in order to secure that the cellulose product 2 is connected to the out-feed device 28. According to alternative embodiments the out-feed device 28 may comprise multiple suction devices connected to the movable arm 29.

The out-feed device 28 is operatively connected to means for determining the real pressure level of the first suction device 30 during the retraction of the first suction device 30 from the moulding tool, and is operatively connected to means for comparing the determined real pressure level of the first suction device 30 and a predetermined pressure level threshold in order to confirm whether successful or unsuccessful removal of the cellulose product 2 from the moulding tool is executed. The means for determining the real pressure level of the first suction device 30 may be constituted by a pressure sensor, and the means for comparing the real pressure level with the pressure level threshold may be constituted by a control unit of the apparatus 1.

When the real pressure level of the first suction device 30 is lower than the predetermined pressure level threshold, the first suction device 30 is in correct engagement with the cellulose product 2 and the removal of the cellulose product 2 is confirmed as successful. When the real pressure level of the first suction device 30 is higher than the predetermined pressure level threshold, the first suction device 30 is not in correct engagement with the cellulose product 2 and the removal of the cellulose product 2 is confirmed as unsuccessful. The pressure level threshold is lower than the ambient pressure level.

According to various embodiments, the out-feed device 28 is connected to a low-pressure source 32 via a conduit 33 extending from the low-pressure source 32 to the out-feed device 28. The out-feed device 28 comprises a controllable valve 34 connected to the movable arm 29 of the out-feed device 28 and configured to open and close said conduit 33.

Thus, when the controllable valve 34 is open the suction device 30 is activated, i.e. under-pressure in the suction cup 31, and the cellulose product 2 is engaged, and when the controllable valve 34 is closed there is ambient-pressure or over-pressure in the suction device 30, i.e. the suction device 30 is deactivated, the cellulose product 2 is released. By having the controllable valve 34 located in close vicinity to the suction device 30, i.e. on the movable arm 29, the response-time from inactive to active suction device 30 is minimized. According to various embodiments, when the under-pressure condition in the suction device 30 is turned off, the suction device 30 is at the same time connected to ambient air and/or a high-pressure source in order to further decrease the response-time to drop the cellulose product 2 at the subsequent step in the apparatus 1 downstream the moulding tool, such as trimming of the scrap and/or stacking.

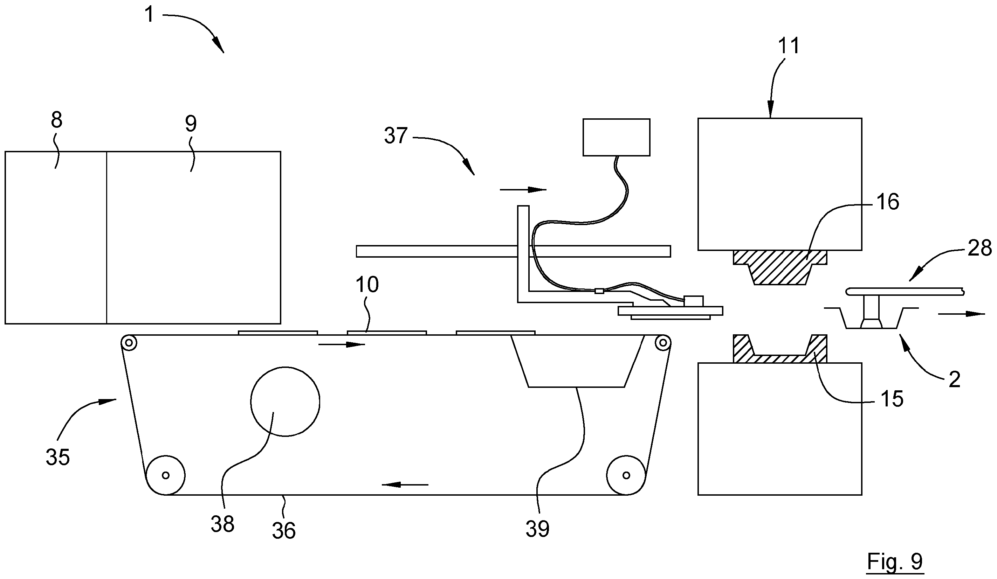

Reference is now made to figure 9 disclosing a schematic illustration of the apparatus 1 for dry manufacturing rigid cellulose products 2, the apparatus 1 comprising an inventive product forming unit 11.

The apparatus 1 comprises a conveyor arrangement, generally designated 35. The conveyor arrangement 35 is configured to receive cellulose blanks 10 in a continuous stream from the cellulose blank forming unit 9, and transporting the continuous stream of cellulose blanks 10 in a transport direction towards the product forming unit 11. The separating/disintegrating unit 8 and the cellulose blank forming unit 9 are schematically disclosed, at the upstream end of the conveyor arrangement 35. According to alternative embodiments the cellulose blanks 10 are provided to the conveyer arrangement 35 from an intermediate storage, manually or automatically.

The conveyor arrangement 35 comprises an endless conveyor belt 36 that is continuously moving during operation of the apparatus 1, and has a predetermined traveling speed in the transport direction of the conveyor arrangement 35. The traveling speed of the conveyor belt 36 is preferably adjustable, and is adjusted in consensus with the cycle rate of the product forming unit 11, and also in consensus with the cycle rate of the cellulose forming unit 9 when applicable. The traveling speed of the conveyor belt 36 is also dependent on the size of the cellulose blanks 10 in relation to the size of the mutual gap between the cellulose blanks 10.

The apparatus 1 further comprises an in-feed device, generally designated 37, configured for transferring the cellulose blank 10 from the conveyor arrangement 35 and loading the cellulose blank 10 into the moulding tool that is open and empty. The in-feed device 37 preferably comprises a suction device configured to engage and transfer the cellulose blank 10 from the continuously moving conveyor belt 36 into the open moulding tool. The suction device of the in-feed device 37, in the transport direction of the conveyor arrangement 35, is moved in conformity with the traveling speed of the conveyor belt 36 during engagement with the cellulose blank 10. Thus, the suction device has the same speed as the cellulose blank 10 when the suction device contacts and grasps/engage the cellulose blank 10. About the same time as the in-feed device 37 engages the cellulose blank 10, the preceding press cycle in the product forming unit 11 is finished and the moulding tool of the product forming unit 11 is opened.

If the speed of the suction device is different than the traveling speed of the conveyor belt 36 when the suction device contacts the cellulose blank 10, there is a risk that the mutual movement between the suction device and the conveyor belt 36 will damage the cellulose blank 10 clamped therebetween. Thus, when the speed of the suction device in the transport direction is equal to the traveling speed of the conveyor belt 36 and the cellulose blank 10, the suction device contacts the cellulose blank 10. When the suction device is in contact with the cellulose blank 10, the suction device is activated. A too early activation of the suction device, i.e. before contact between the suction device and the cellulose blank 10, entails a risk that the orientation of the cellulose blank 10 is changed and thereby an incorrect loading of the cellulose blank 10 into the moulding tool.

In figure 9, the in-feed device 37 transfers the cellulose blank 10 into the moulding tool, and concurrently the pressed cellulose product 2 from the preceding press-cycle is removed from the moulding tool. According to the disclosed embodiment the moulding tool is located in the transport direction of the conveyor arrangement 35. According to alternative embodiments, the moulding tool is located at the side of the conveyor arrangement 35, i.e. in the transverse direction, seen in relation to the transport direction of the conveyor arrangement 35. Thereby, the apparatus may comprise one or more moulding tools on each side of the conveyor arrangement 35.

According to various embodiments, after the suction device has grasped/engaged the cellulose blank 10, at least one of the suction device and the conveyor belt 36 is/are displaced away from the other. Thereafter the cellulose blank 10 is transferred into the moulding tool. According to the disclosed embodiment, the speed of the suction device in the transport direction of the conveyor arrangement 35 is increased to exceed the traveling speed of the conveyor belt 36. In order to have time to transfer the cellulose blank 10 into the moulding tool and return the in-feed device 37 to the start position, before it is time to engage the next cellulose blank 10.

Thereafter the suction device of the in-feed device 37 releases the cellulose blank 10 in the open moulding tool, by deactivating the suction device. According to alternative embodiments, the cellulose blank 10 may also be blown off from the suction device in order to secure proper release.

According to various embodiments, the cellulose blank 10 is transferred into contact with the first mould part 15 by means of the suction device before the cellulose blank 10 is released from the suction device. According to various embodiments, the in-feed device 37 may be used to pre-form the cellulose blank 10 into the main recess 17 of the first mould part 15 when releasing the cellulose blank 10 in contact with the first mould part 15. By releasing the cellulose blank 10 in contact with the first mould part 15, the orientation and location of the cellulose blank 10 is under control, which will guarantee an optimal forming of the cellulose product 2 in the moulding tool.

According to various embodiments, the cellulose blank 10 is retained on the continuously moving conveyor belt 36 by means of an air-removing arrangement 38, i.e. a fan, configured to pull the cellulose blank 10 towards the conveyor belt 36, i.e. by means of under-pressure condition. Thereby the orientation and location of the cellulose blank 10 is known and fixed, in relation to the moving conveyor belt 36. However, the air-removing arrangement 38 is not active or reduced at the position the suction device engages the cellulose blank 10 and lifts the cellulose blank 10 from the conveyor belt 36, e.g. by means of a box/partition 39. This part of the conveyor belt 36 is also called pick-up zone. If a too extensive under-pressure is active when lifting the cellulose blank 10 from the conveyor belt 36, the cellulose blank 10 may become damaged, i.e. one segment/layer of the cellulose blank 10 is in engagement with the suction device and one segment/layer of the cellulose blank 10 is still in engagement with the conveyor belt 36.

When the removal of the cellulose product 2 is confirmed as successful, the operation of the apparatus 1 and of the product forming unit 11 continues.

However, when the removal of the cellulose product 2 is confirmed as unsuccessful, i.e. no cellulose product 2 is detected to follow the out-feed device 28 during retraction of the out-feed device 28 from the moulding tool, the operation of the product forming unit 11 is stopped. According to various embodiments, the operation of the entire apparatus 1 is stopped.

According to various embodiments, the operation upstream the product forming unit 11 is continued also when the removal of the cellulose product 2 is conformed as unsuccessful. In such situations the cellulose blanks 10 on the conveyor belt 36 are not engaged by the in-feed device 37, which is stopped, but the cellulose blanks 10 continues to a scrap container. It is preferred that the formation of cellulose blanks 10 and the conveyor arrangement 35 are slowed down when the operation of the product forming unit 11 is stopped, in order to minimize the scrap. The scrap cellulose blanks may be recircled into the separating/disintegrating unit 8. If the formation of cellulose blanks 10 is fully stopped, the manufacturing process may take some time before it reaches steady state upon restart.

According to various embodiments, the product forming unit 11 is manually cleaned/checked, before the manufacturing process is restarted.

According to various embodiments, the apparatus 1 performs an automatic cleaning and/or check. The product forming unit 11 may comprise a visual and/or thermal instrument to detect whether the cellulose product 2 is still present in the moulding tool.

If the cellulose product 2 is determined to be stuck on the second mould part 16, ejector pins may be used to force the cellulose product 2 to become free and thereafter a new removal of the cellulose product 2 is conducted. If the new removal of the cellulose product 2 is confirmed as successful, the operation of the apparatus 1 is restarted.

If the cellulose product 2 is determined to be stuck on the first mould part 15, ejector pins may be used to force the cellulose product 2 to become free and thereafter a new removal of the cellulose product 2 is conducted. If the new removal of the cellulose product 2 is confirmed as successful, the operation of the apparatus 1 is restarted.

If the automatic cleaning and/or check is not successful, manual cleaning/check is performed.

According to various embodiments, before or after the product forming unit 11 is stopped, it is determined whether a cellulose blank 10 was successfully provided into the moulding tool before the pressing. Thus, during insertion of the cellulose blank 10 into the moulding tool, the real pressure level of the in-feed device 37 may be determined and compared with a predetermined pressure level threshold, wherein the insertion of the cellulose blank 10 into the moulding tool is confirmed as successful when the real pressure level is lower than the pressure level threshold and wherein the insertion of the cellulose blank 10 into the moulding tool is determined as unsuccessful when the real pressure level is higher than said pressure level threshold.

If no cellulose blank 10 was provided into the moulding tool before the pressing, there is no problem that the removal of the cellulose product 2 is determined as unsuccessful, and the operation of the product forming unit 11 may continue or be restarted.

According to an alternative embodiment, after each insertion of cellulose blank 10 into the moulding tool, a visual and/or thermal instrument may be used to detect whether a cellulose blank 10 is present in the moulding tool before the pressing.

Thus, according to the inventive method for controlling a product forming unit 11 configured for dry manufacturing rigid cellulose products 2 having essentially non-flat general shape from a cellulose blank 10 using a product forming unit 11 according to the above, the method comprising the steps of:
- providing the cellulose blank 10 into the moulding tool between the first mould part 15 and the second mould part 16,
- displacing at least one of the first mould part 15 and the second mould part 16 in the axial direction in relation to each other, towards each other,
- pressing the heated cellulose blank 10 between the first mould part 15 and the second mould part 16,
- displacing at least one of the first mould part 15 and the second mould part 16 in the axial direction in relation to each other, away from each other,
- inserting the first suction device 30 of the out-feed device 28 into the moulding tool between the first mould part 15 and the second mould part 16 in order to engage the cellulose product 2, and
- retracting the first suction device 30 of the out-feed device 28 from the moulding tool in order to remove the cellulose product 2 from the moulding tool,
during said retraction of the first suction device 30 from the moulding tool, the method comprises the steps of:
- determining a real pressure level of the first suction device 30, and
- comparing the determined real pressure level of the first suction device 30 and a predetermined pressure level threshold, wherein the removal of the cellulose product 2 from the moulding tool is confirmed as successful when the real pressure level is lower than the pressure level threshold and wherein the removal of the cellulose product 2 from the moulding tool is determined as unsuccessful when the real pressure level is higher than said pressure level threshold.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Any subject matter falling outside the scope of the claims is provided for information purposes, and for placing the invention into a relevant context.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Method for controlling a product forming unit (11) configured for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a predetermined forming pressure P in the axial direction of the moulding tool, the product forming unit (11) further comprising heating means for heating the cellulose blank (10) to a forming temperature T and an out-feed device (28) having a movable arm (29) and a first suction device (30) connected to said arm (29),
the method comprising the steps of:
- providing the cellulose blank (10) into the moulding tool between the first mould part (15) and the second mould part (16),
- displacing at least one of the first mould part (15) and the second mould part (16) in the axial direction in relation to each other, towards each other,
- pressing the heated cellulose blank (10) between the first mould part (15) and the second mould part (16),
- displacing at least one of the first mould part (15) and the second mould part (16) in the axial direction in relation to each other, away from each other,
- inserting the first suction device (30) of the out-feed device (28) into the moulding tool between the first mould part (15) and the second mould part (16) in order to engage the cellulose product (2), and
- retracting the first suction device (30) of the out-feed device (28) from the moulding tool in order to remove the cellulose product (2) from the moulding tool,
during said retraction of the first suction device (30) from the moulding tool, the method is **characterized by** the steps of:
- determining a real pressure level of the first suction device (30), and
- comparing the determined real pressure level of the first suction device (30) and a predetermined pressure level threshold, wherein the removal of the cellulose product (2) from the moulding tool is confirmed as successful when the real pressure level is lower than the pressure level threshold and wherein the removal of the cellulose product (2) from the moulding tool is determined as unsuccessful when the real pressure level is higher than said pressure level threshold.

2. The method according to claim 1, wherein the operation of the product forming unit (11) is stopped when the removal of the cellulose product (2) from the moulding tool is determined as unsuccessful.

3. The method according to claim 1 or 2, wherein the method comprises a step of determining whether a cellulose blank (10) was successfully provided into the moulding tool before the pressing.

4. The method according to any preceding claim, wherein the cellulose blank (10) is composed of an air-laid cellulose blank.

5. Product forming unit (11) for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a predetermined forming pressure P in the axial direction of the moulding tool, the product forming unit (11) further comprising heating means for heating the cellulose blank (10) to a forming temperature T and an out-feed device (28) having a movable arm (29) and a first suction device (30) connected to said arm (29), wherein first suction device (30) of the out-feed device (28) is insertable into the moulding tool between the first mould part (15) and the second mould part (16) after the pressing of the cellulose product (2) in order to engage the cellulose product (2), wherein the first suction device (30) of the out-feed device (28) is retractable from the moulding tool in order to remove the cellulose product (2) from the moulding tool, **characterized in that** the out-feed device (28) is operatively connected to means for determining the real pressure level of the first suction device (30) during the retraction of the first suction device (30), and is operatively connected to means for comparing the determined real pressure level of the first suction device (30) and a predetermined pressure level threshold in order to confirm whether successful or unsuccessful removal of the cellulose product (2) from the moulding tool is executed.

6. The product forming unit (11) according to claim 5, wherein the out-feed device (28) is connected to a low-pressure source (32) via a conduit (33) extending from the low-pressure source (32) to the out-feed device (28), the out-feed device (28) comprising a controllable valve (34) connected to the movable arm (29) of the out-feed device (28) and configured to open and close said conduit (33).

7. The product forming unit (11) according to claim 5 or 6, wherein the first suction device (30) of the out-feed device (28) is constituted by a suction cup (31).
